# EUROPÄISCHE PATENTSCHRIFT

(11) **EP 2 201 671 B1**
(45) Veröffentlichungstag und Bekanntmachung des Hinweises auf die Patenterteilung: **01.05.2019**
(21) Anmeldenummer: 08840452.0
(22) Anmeldetag: 25.09.2008
(51) Int. Cl.: H02M 7/493, H02J 3/38

(54) **WECHSELRICHTER, INSBESONDERE SOLARWECHSELRICHTER, MIT LASTAUSGLEICHSREGELUNG**
INVERTER, ESPECIALLY A SOLAR INVERTER, FEATURING LOAD COMPENSATION REGULATION
ONDULEUR, EN PARTICULIER ONDULEUR SOLAIRE, AVEC REGULATION DE LA REPARTITION DE CHARGE

(30) Priorität: 17.10.2007 DE 102007049774
(43) Veröffentlichungstag der Anmeldung: 30.06.2010
(73) Patentinhaber: Siemens Aktiengesellschaft, 80333 München (DE)
(72) Erfinder: REIHER, Karsten, 91452 Wilhermsdorf (DE); WEIDAUER, Jens, 91315 Höchstadt (DE)
(86) Internationale Anmeldenummer: PCT/EP2008/062846
(87) Internationale Veröffentlichungsnummer: WO 2009/050015

(56) Entgegenhaltungen:
- EP-A- 0 435 460
- EP-A- 1 047 179
- DE-A1- 3 602 496
- DE-A1- 19 933 039
- GB-A- 2 012 501
- PANOV Y ET AL: "Analysis and design of N paralleled DC-DC converters with master-slave current-sharing control" APPLIED POWER ELECTRONICS CONFERENCE AND EXPOSITION, 1997. APEC '97 CO NFERENCE PROCEEDINGS 1997., TWELFTH ANNUAL ATLANTA, GA, USA 23-27 FEB. 1997, NEW YORK, NY, USA,IEEE, US, Bd. 1, 23. Februar 1997 (1997-02-23), Seiten 436-442, XP010215854 ISBN: 978-0-7803-3704-6
- DIXON J W ET AL: "SERIES AND PARALLEL OPERATION OF HYSTERESIS CURRENT-CONTROLLED PWM RECTIFIERS" IEEE TRANSACTIONS ON INDUSTRY APPLICATIONS, IEEE SERVICE CENTER, PISCATAWAY, NJ, US, Bd. 25, Nr. 4, 1. Juli 1989 (1989-07-01), Seiten 644-651, XP000047605 ISSN: 0093-9994
- "Listenhandbuch SINAMICS S" [Online] März 2006 (2006-03), SIEMENS AG , XP002520436 Gefunden im Internet: URL:http://www.automation.siemens.com/doco nweb/pdf/SINAMICS_0306_D/LH1.pdf?p=1> [gefunden am 2009-03-20] Funktionspläne 8940, 8946, sowie Parameterbeschreibungen p3400.3, p3515

## Beschreibung

Die Erfindung betrifft einen Wechselrichter, insbesondere einen Solarwechselrichter, welcher mehrere parallel geschaltete Einzelwechselrichter mit jeweils einem Leistungsteil zur Umsetzung einer eingangsseitigen Feldspannung in eine ausgangsseitige Netzspannung aufweist. Einer der Einzelwechselrichter ist als Master betreibbar. Die verbleibenden Einzelwechselrichter sind als Slaves betreibbar. Alle Einzelwechselrichter weisen einen Stromregler und einen überlagerten Spannungsregler zur Regelung ihres jeweiligen Leistungsteils auf. Es ist allen Spannungsreglern ein vorgebbarer Spannungssollwert zur Spannungsregelung zugeführt.

Aus der DE 36 02 496 A1 ist eine Wechselrichteranordnung mit n parallel betriebenen Wechselrichtern bekannt, wobei (n-1) addierte Ausgangsströme der Wechselrichter so geregelt werden, dass die Phasen der Ausgangsströme aller n Wechselrichter im wesentlichen übereinstimmen und ihre Beträge je das 1/n-fache des Betrages des Summenstroms sind.

Die betrachteten Wechselrichter wandeln die z. B. von einem Solarfeld oder von einem Solarmodul bereitgestellte Gleichspannung in eine Wechselspannung um. Der Wechselrichter kann beispielsweise ausgangsseitig in ein 1-phasiges 50Hz/230V-Stromversorgungsnetz oder in ein 60Hz/120V-Stromversorgungsnetz eines Energieversorgungsunternehmens einspeisen. Für große Solarfelder kommen vorzugsweise Drehstromwechselrichter zum Einsatz, welche in ein entsprechendes 3-phasiges Stromversorgungsnetz, wie z. B. in ein 50Hz/400V-Stromversorgungsnetz, einspeisen. Es können ein oder auch mehrere Wechselrichter mit einer gemeinsamen Sammelschiene verbunden sein, von der in das Netz eingespeist wird.

Alternativ kann die Feldspannung von Windkraftgeneratoren, von Brennstoffzellen oder auch von Biogasanlagen stammen.

Wechselrichter größerer Leistung, die eingangsseitig an ein Solarfeld angeschlossen sind, weisen üblicherweise mehrere parallel geschaltete Einzelwechselrichter auf, die bei steigender Intensität der Sonneneinstrahlung einzeln zugeschaltet werden. Bei Zuschaltung aller Einzelwechselrichter kann eine maximale elektrische Leistung in das Stromversorgungsnetz zurückgespeist werden. Die stufenweise Zuschaltung verbessert den Wirkungsgrad des gesamten Wechselrichters bzw. der gesamten Photovoltaikanlage bei kleineren Einstrahlungswerten.

Die Feldspannung liegt typischerweise an einem Spannungszwischenkreis des jeweiligen Leistungsteils der Einzelwechselrichter an. Die Feldspannung entspricht daher auch der Zwischenkreisspannung.

Die z. B. von einem Solarfeld erzeugte Gleichspannung ist abhängig von der aktuellen Sonneneinstrahlung sowie insbesondere von dessen elektrischer Belastung. Im Leerlauf erreicht die Feldspannung des Solarfeldes ihr Maximum. Diese Spannung wird auch als Leerlaufspannung bezeichnet. Bei Belastung, das heißt bei Einspeisung über den Wechselrichter in das elektrische Netz, fällt diese Spannung ab. Vorzugsweise weisen der Wechselrichter bzw. die Einzelwechselrichter jeweils eine Steuereinheit auf, welche die elektronischen Halbleiterbauelemente im Leistungsteil des jeweiligen Einzelwechselrichters derart ansteuert, dass die in das elektrische Netz eingespeiste Leistung maximal ist. Typischerweise führt die Steuereinheit hierzu ein so genanntes Trackingprogramm aus, um fortlaufend den gleichfalls schwankenden maximalen Leistungspunkt (MPP für Maximal Power Point) zu "suchen".

Die Einzelwechselrichter verfügen vorzugsweise über eine eigene Regelung der Zwischenkreisspannung. Die Zwischenkreisspannung wird von jedem Einzelwechselrichter gemessen und dient als Istwert der jeweiligen Regelung. Aufgrund von Fertigungstoleranzen treten Abweichungen bei den Spannungsmesswerten zwischen den Einzelwechselrichtern auf. So kann beispielsweise ein erster Einzelwechselrichter eine Feldspannung von 601 V und ein zweiter Einzelwechselrichter eine Feld- bzw. Zwischenkreisspannung von 599 V messen. Als Folge davon kann es zu einer ungleichen Belastung der Einzelwechselrichter kommen. So kann ein Teil der Einzelwechselrichter einen hohen Strom führen und eine hohe elektrische Leistung in das Netz einspeisen, während ein anderer Teil nahezu im Leerlauf ist. Die Ursache hierfür soll an einem nachfolgenden Beispiel verdeutlicht werden:
Es wird ein übergeordneter Spannungssollwert in Höhe von 600 V vorgegeben, für den die Einspeiseleistung maximal sein soll. Aufgrund der oben genannten Fertigungstoleranzen misst der erste Einzelwechselrichter die Spannung von 601 V. Diese Spannung ist jedoch zu hoch. Folglich wird die Steuerung des ersten Einzelwechselrichters das zugehörige Leistungsteil derart ansteuern, dass mehr Strom in das Netz eingespeist wird, um die Feldspannung durch die nun erhöhte Belastung des Solarfeldes abzusenken. Zugleich wird die Steuerung des zweiten Einzelwechselrichters, die einen Spannungswert von 599 V erfasst hat, das zugehörige Leistungsteil derart ansteuern, dass weniger Strom in das Netz eingespeist wird, um die Feldspannung durch eine nun vermeintlich geringere Belastung des Solarfeldes anzuheben. Die beiden gegenläufigen Effekte verstärken sich gegenseitig nachteilig so, dass letztendlich ein Teil der Einzelwechselrichter nahezu im Leerlauf betrieben wird, während der andere Teil mit voller Leistung Strom in das Netz einspeist.

Zur Behebung dieses Problems ist es bekannt, die Messwerterfassung für die Zwischenkreisspannung der jeweiligen Einzelwechselrichter so abzugleichen, dass eine in etwa gleiche Lastaufteilung erzielbar ist. Nachteilig daran ist der hohe messtechnische Abgleichaufwand. Ein weiterer Nachteil ist, dass trotz des Abgleichs ein "Wegdriften" der Messwerte durch Alterungsprozesse der Messtechnikbauteile nicht verhindert werden kann.

Es ist somit eine Aufgabe der Erfindung, einen Wechselrichter anzugeben, bei welchem eine gleichmäßige Belastung der Einzelwechselrichter zuverlässig erreicht wird.

Die Aufgabe der Erfindung wird mit den Merkmalen des Patentanspruchs 1 gelöst. Vorteilhafte Ausführungsformen sind in den abhängigen Ansprüchen 2 bis 7 genannt. Erfindungsgemäß weisen die Slaves jeweils einen Lastausgleichsregler auf. Dem jeweiligen Lastausgleichsregler ist eingangsseitig ein Stromistwert des Masters zugeführt. Der jeweilige Lastausgleichsregler ist ausgangsseitig zur Lastausgleichsregelung zumindest mittelbar mit einem Reglereingang des jeweiligen Leistungsteils verbunden.

Mittels des erfindungsgemäßen Wechselrichters wird eine gleichmäßige Verteilung der Lastströme erreicht. Aufgrund der gleichmäßigen thermischen Belastung der Einzelwechselrichter erhöhen sich die Zuverlässigkeit und die Lebensdauer des erfindungsgemäßen Wechselrichters. Weiterhin entfällt der aufwändige Messabgleich für die Spannungserfassung der Feldspannung bzw. der Zwischenkreisspannung. Selbst größere Toleranzen in der Spannungsmesserfassung, wie sie z. B. durch Alterung oder durch einen Austausch entstehen können, haben keinen nachteiligen Einfluss auf die Gleichverteilung der Lastströme.

Nach einer ersten Ausführungsform der Erfindung weisen die Slaves jeweils einen Differenzbildner auf, welcher eine Stromistwertdifferenz aus dem vom Master zugeführten Stromistwert und aus einem Stromistwert des jeweiligen Slaves bildet. Die jeweilige Stromistwertdifferenz ist dem jeweiligen Lastausgleichsregler eingangsseitig zugeführt. Der jeweilige Lastausgleichsregler weist Mittel zur Erzeugung einer Korrekturspannung in Abhängigkeit der Stromistwertdifferenz auf. Der jeweilige Spannungsregler weist einen Spannungssollwerteingang für den vorgebbaren Spannungssollwert auf. Dem jeweiligen Spannungssollwerteingang der Slaves ist zudem die jeweilige Korrekturspannung zur Lastausgleichsregelung zugeführt.

Bei dieser Ausführungsform wird mit zunehmender Abweichung zwischen dem Stromistwert des Masters und dem jeweiligen Stromistwert des Slaves ein höherer bzw. niedrigerer Spannungssollwert für die Feldspannung "vorgetäuscht", als dies tatsächlich der Fall ist. Bei geeigneter Bemessung der Korrekturspannung pendeln sich die Lastströme aller Einzelwechselrichter auf genau den gleichen Laststrom ein.

Nach einer Ausführungsform ist abhängig vom Betrag der Korrekturspannung eine betragsmäßige Absenkung des Spannungssollwertes für den jeweiligen Slave für zunehmende Werte der Stromistwertdifferenz bewirkbar. In entsprechender Weise ist abhängig vom Betrag der Korrekturspannung eine betragsmäßige Erhöhung des Spannungssollwertes für den jeweiligen Slave für abnehmende Werte der Stromistwertdifferenz bewirkbar. Bei dieser Ausführungsform wird beispielhaft angenommen, dass die Stromwerte ein positives Vorzeichen aufweisen.

Mit anderen Worten: Übersteigt der Stromistwert des Masters den Stromistwert des Slaves betragsmäßig, bewirkt der Betrag der Korrekturspannung eine betragsmäßige Absenkung des Spannungssollwertes für den Slave. Übersteigt der Stromistwert des Slaves den Stromistwert des Masters betragsmäßig, bewirkt der Betrag der Korrekturspannung eine betragsmäßige Erhöhung des Spannungssollwertes für den Slave.

Im Besonderen ist die Korrekturspannung begrenzt und beträgt z. B. maximal 5 % bis 10 % des maximalen Spannungssollwertes.

Nach einer weiteren Ausführungsform sind der Master und die Slaves weitestgehend identisch aufgebaute Einzelwechselrichter. Mit "weitestgehend" ist gemeint, dass die Einzelwechselrichter in fertigungstechnischer Hinsicht identisch sind. Die Einzelwechselrichter können sich beispielsweise hinsichtlich einer in einem elektronischen nichtflüchtigen Speicher hinterlegten Seriennummer unterscheiden, anhand derer eine automatisierte Festlegung des Masters erfolgen kann. Alternativ können die Einzelwechselrichter Konfigurationsschalter, wie z. B. so genannte DIP-Schalter, aufweisen, über die die Betriebsart der Einzelwechselrichter festgelegt werden kann.

Im Besonderen weisen die Einzelwechselrichter jeweils eine Steuereinheit zum Steuern und Regeln auf. Die Funktion der jeweiligen Spannungsregler, Stromregler und Lastausgleichsregler sind in Form von Programmroutinen nachgebildet, welche auf der jeweiligen Steuereinheit ausführbar sind. Die Steuereinheit ist vorzugsweise ein Mikrocontroller oder ein Mikroprozessor.

Vorzugsweise ist auch eine so genannte Tracker- oder Suchprogrammroutine in der Steuereinheit hinterlegt, welche in der Funktion des Masters fortlaufend den maximalen Leistungspunkt (MPP) "aufspürt". Der dazu korrespondierende Spannungssollwert wird dann an alle Einzelwechselrichter zum Einstellen der Zwischenkreisspannung bzw. Feldspannung ausgegeben.

Schließlich ist der Wechselrichter ein Solarwechselrichter zum eingangsseitigen Anschließen an ein Solarmodul oder an ein Solarfeld sowie zum ausgangsseitigen Anschließen an ein Stromversorgungsnetz.

Die Erfindung sowie vorteilhafte Ausführungen der Erfindung werden im Weiteren anhand der nachfolgenden Figuren näher beschrieben. Es zeigen:
- FIG 1: einen Solarwechselrichter mit beispielhaft drei parallel geschalteten Einzelwechselrichtern,
- FIG 2: eine Prinzipdarstellung eines Wechselrichters mit mehreren parallel geschalteten Einzelwechselrichtern nach dem Stand der Technik,
- FIG 3: eine Prinzipdarstellung eines Wechselrichters mit mehreren parallel geschalteten Einzelwechselrichtern und mit einer Lastausgleichsregelung gemäß der Erfindung,
- FIG 4: ein alternatives Beispiel eines Wechselrichters welcher nicht in den Schutzumfang fällt und

- FIG 5: ein weiteres Beispiel des Wechselrichters mit einer Lastausgleichsregelung ohne Spannungsregelung der Slaves, welche nicht in den Schutzumfang fällt

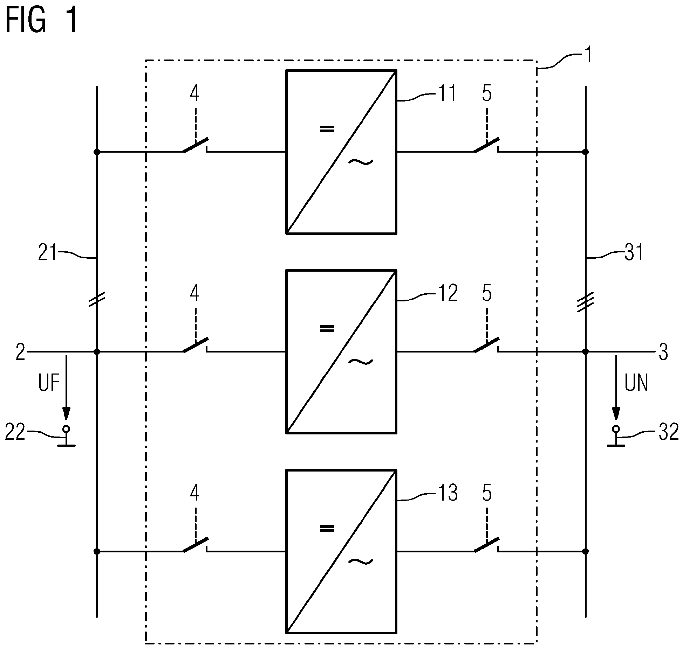

FIG 1 zeigt einen Solarwechselrichter 1 mit beispielhaft drei parallel geschalteten Einzelwechselrichtern 11-13. Die jeweiligen Einzelwechselrichter 11-13 können mittels eingangsseitiger Schalter 4 einzeln an Gleichspannungsleitungen 21 geschaltet werden, die ihrerseits mit einem Solarfeld 2 verbunden sind. Mit UF ist eine Feld- oder Zwischenkreisspannung bezeichnet, die auf ein erstes Bezugspotential 22 bezogen ist. Weiterhin sind die jeweiligen Einzelwechselrichter 11-13 mittels ausgangsseitiger Schalter 5 einzeln an ein Stromversorgungsnetz 3 anschließbar. Im Beispiel der vorliegenden FIG 1 erfolgt die Einspeisung dreiphasig. Mit dem Bezugszeichen 31 sind korrespondierende Netzeinspeiseleitungen, mit dem Bezugszeichen 21 Gleichspannungsleitungen bzw. eine Sammelschiene bezeichnet. Mit UN ist eine dreiphasige Netzspannung bezeichnet, die auf ein zweites Bezugspotential, wie z. B. Erdpotential, bezogen ist. Die Ansteuerung der Schalter 4, 5 kann durch eine übergeordnete Steuerung oder durch einen als Master 11 ausgewiesenen Einzelwechselrichter 12, 13 erfolgen.

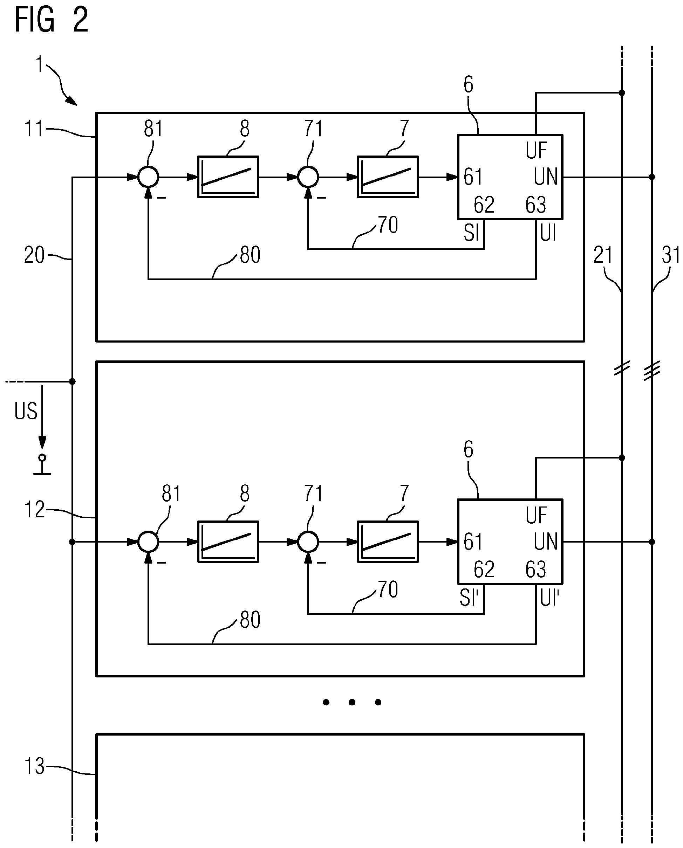

FIG 2 zeigt eine Prinzipdarstellung eines Wechselrichters 1 mit mehreren parallel geschalteten Einzelwechselrichtern 11-13 nach dem Stand der Technik.

Im Beispiel der FIG 2 ist der Wechselrichter 1 ein Solarwechselrichter. Generell ist der gezeigte Wechselrichter 1 zum eingangsseitigen Anschließen an eine hinsichtlich der Einspeiseleistung veränderliche Strom- bzw. Spannungsquelle ausgebildet, wobei der Wechselrichter 1 die Strom- bzw. Spannungsquelle so belasten kann, dass eine maximale elektrische Leistung in das ausgangsseitige Netz eingespeist wird. Die Strom- bzw. Spannungsquelle kann beispielsweise eine von einem Solarfeld erzeugte Gleichspannung oder eine von einem Stromgenerator einer Windkraftanlage gleichgerichtete Gleichspannung oder eine von einer Brennstoffzelle erzeugte Gleichspannung sein.

Die jeweiligen Einzelwechselrichter 11, 13 weisen jeweils ein Leistungsteil 6 zur Umsetzung der eingangsseitigen Feldspannung UF in die ausgangsseitige Netzspannung UN auf. Im Beispiel der FIG 2 wird der obere Einzelwechselrichter 11 als Master betrieben, während die beiden anderen Einzelwechselrichter 12, 13 als Slaves betrieben werden. Der Master 11 und die Slaves 12, 13 sind typischerweise identisch aufgebaut. Alle Einzelwechselrichter 11-13 können jeweils eine prozessorgestützte Steuereinheit zum Steuern und Regeln aufweisen. Die Steuereinheiten weisen üblicherweise eine Startroutine zur Auswahl des Masters 11 beim Betrieb des Wechselrichters 1 auf. Die Auswahl kann beispielsweise auf Basis einer individuellen, in einem elektronischen Speicher des jeweiligen Einzelwechselrichters 11-13 hinterlegten Seriennummer erfolgen.

Alle Einzelwechselrichter 11-13 weisen eine nicht weiter gezeigte Spannungserfassung, wie z. B. einen Spannungswandler oder einen LEM-Spannungswandler, zur Erfassung der Feld- oder Zwischenkreisspannung UF sowie eine Laststromerfassung, wie z. B. einen Stromwandler, auf. Im Beispiel der FIG 2 erfolgt die Spannungs- und Strommessung im jeweiligen Leistungsteil 6. Die erfassten Stromistwerte und Spannungsistwerte des Masters 11 sind mit dem Bezugszeichen SI und UI, die der Slaves 12, 13 mit SI' und UI' bezeichnet. Alle gezeigten Einzelwechselrichter 11-13 weisen jeweils einen Stromregler 7 und einen überlagerten Spannungsregler 8 zur Regelung des jeweiligen Leistungsteils 6 auf. Zur Regelung sind die Istwerte SI, UI, SI' und UI' über entsprechende Rückführpfade 70, 80 zu den beiden Reglern 8, 9 zurückgeführt. Weiterhin wird allen Spannungsreglern 8 ein vorgebbarer Spannungssollwert US zur Spannungsregelung zugeführt. Er kann z. B. von einer nicht weiter gezeigten Steuereinheit des Masters 11 oder von einer übergeordneten Steuereinheit des Wechselrichters 1 bereitgestellt werden. Hierzu sind die Einzelwechselrichter 11-13 untereinander über eine Spannungssignalleitung 20 miteinander verbunden. Typischerweise erfolgt die Verteilung des Spannungssollwertes US über eine Busverbindung, wie z. B. über einen Feldbus.

Vorzugsweise sind die Funktionen der jeweiligen Spannungsregler 8 und Stromregler 7 in Form von Programmroutinen nachgebildet, welche auf der jeweiligen Steuereinheit ausführbar sind.

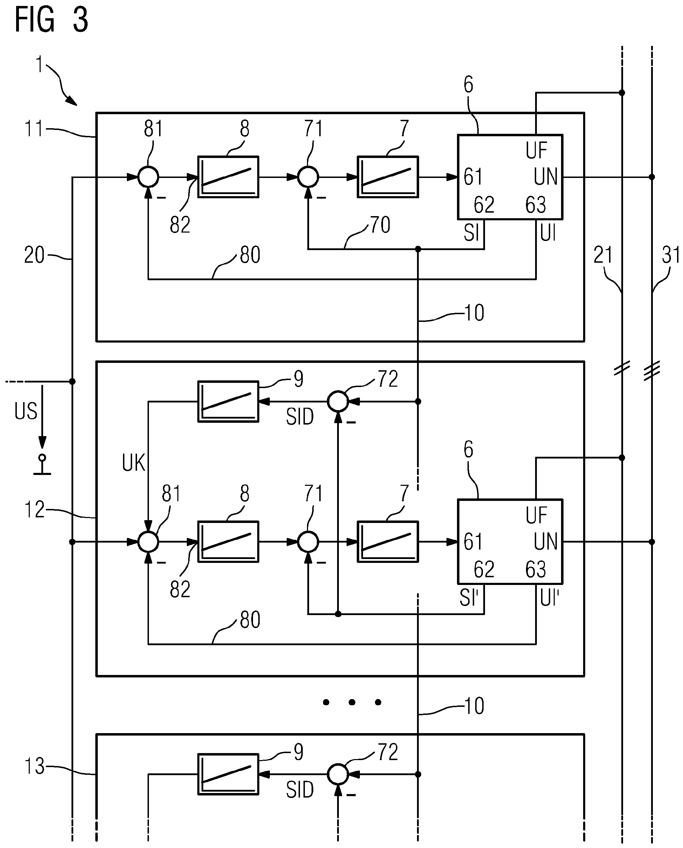

FIG 3 zeigt eine Prinzipdarstellung eines Wechselrichters 1 mit mehreren parallel geschalteten Einzelwechselrichtern 11-13 und mit einer Lastausgleichsregelung gemäß der Erfindung.

Erfindungsgemäß weisen die Slaves 12, 13 im Vergleich zu FIG 2 jeweils einen Lastausgleichsregler 9 auf. Es ist nun dem jeweiligen Lastausgleichsregler 9 eingangsseitig der Stromistwert SI des Masters 11 zugeführt. Ausgangsseitig ist der jeweilige Lastausgleichsregler 9 zumindest mittelbar mit einem Reglereingang 61 des jeweiligen Leistungsteils 6 zur Lastausgleichsregelung verbunden.

Im Besonderen weisen die Slaves 12, 13 zur Lastverteilung jeweils einen Differenzbildner 72 auf, welcher eine Stromistwertdifferenz SID aus dem vom Master 11 zugeführten Stromistwert SI und dem Stromistwert SI' des jeweiligen Slaves 12, 13 bildet. Der Differenzbildner 72 ist im einfachsten Fall ein Addierer, welchem der jeweilige Stromistwert SI' der Slaves 12, 13 negiert zugeführt wird, während der Stromistwert SI des Masters 11 unverändert, das heißt nicht negiert, zugeführt wird. Dies ist durch ein Minuszeichen symbolisiert, welches neben dem als Knoten dargestellten Differenzbildner 72 eingezeichnet ist. Die jeweilige Stromistwertdifferenz SID wird anschließend dem jeweiligen Lastausgleichsregler 9 eingangsseitig zugeführt.

Weiterhin weist der jeweilige Lastausgleichsregler 9 nicht weiter dargestellte Mittel zur Erzeugung einer Korrekturspannung UK bzw. eines Korrekturwertes in Abhängigkeit der Stromistwertdifferenz SID auf. Die jeweilige Korrekturspannung UK wird dann dem jeweiligen Spannungsregler 8 zur Lastausgleichsregelung zugeführt. Hierzu ist im Beispiel der FIG 3 dem jeweiligen Spannungsregler 8 ein Addiererknoten 81 vorgeschaltet, welchem die jeweilige Korrekturspannung UK, der jeweilige negierte Spannungsistwert UI' des Slaves 12, 13 und der aktuell vorliegende Spannungssollwert US zugeführt werden. Der Addiererknoten 81 ist ausgangsseitig mit einem entsprechenden Spannungssollwerteingang 82 des jeweiligen nachgeschalteten Spannungsreglers 8 verbunden, der das ihm zugeführte Additionssignal regelungstechnisch weiterverarbeitet.

Insbesondere ist abhängig vom Betrag der Korrekturspannung UK eine betragsmäßige Absenkung des Spannungssollwertes US für den jeweiligen Slave 12, 13 für zunehmende Werte der Stromistwertdifferenz SID bewirkbar. In entsprechender Weise ist abhängig vom Betrag der Korrekturspannung UK eine betragsmäßige Erhöhung des Spannungssollwertes US für den jeweiligen Slave 12, 13 für abnehmende Werte der Stromistwertdifferenz SID bewirkbar. Es wurden dabei für die Stromwerte beispielhaft positive Werte angenommen.

Dadurch wird vorteilhaft bei einer Laststromabweichung des Slaves 12, 13 vom Master 11 der vorgegebene Spannungssollwert US im jeweiligen Slave 12, 13 in geringem Maße angehoben bzw. abgesenkt, um so der Laststromabweichung entgegenzuwirken. Die Stromistwertdifferenz SID kann z. B. in eine dazu proportionale Korrekturspannung UK abgebildet werden. Üblicherweise kommt ein Regelalgorithmus zum Einsatz, welcher im Allgemeinen einen PI-Regler, bestehend aus einem Proportionalglied und einem dazu parallelen Integrator, aufweist.

Alternativ kann die Stromistwertdifferenz SID über eine quadratische oder über eine andere geeignete mathematische Funktion in die Korrekturspannung UK abgebildet werden. Vorzugsweise beträgt die jeweilige Korrekturspannung UK maximal 5 % bis 10 % des maximalen (nominalen) Spannungssollwertes US.

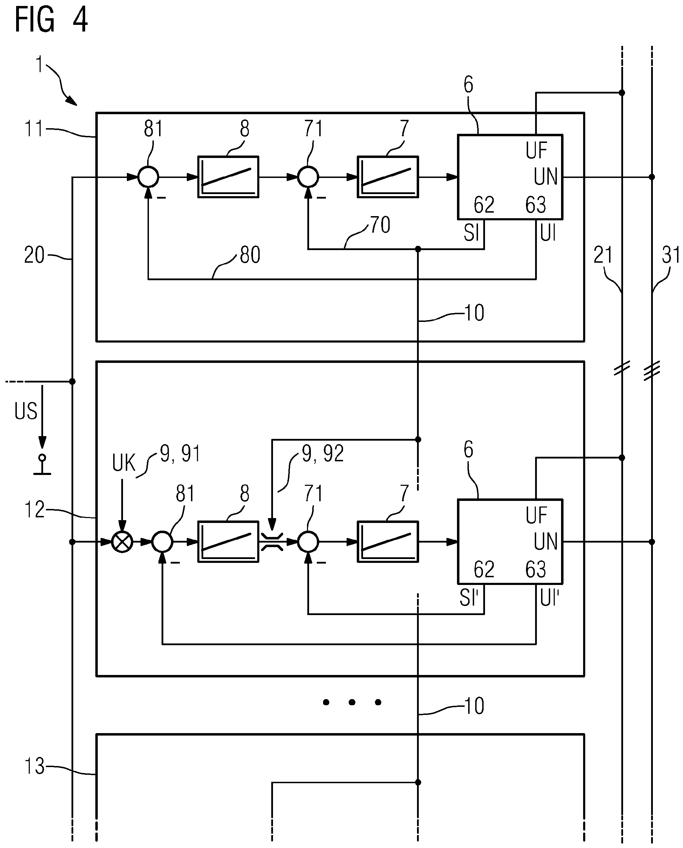

FIG 4 zeigt ein alternatives Beispiel des Wechselrichters 1 welches nicht in den Schutzumfang fällt.

Die Lastverteilung erfolgt dabei mittels einer untersteuerten Spannungsregelung mit einstellbarer Strombegrenzung.

Im Vergleich zur Prinzipschaltung gemäß FIG 3 setzt sich der Lastausgleichsregler 9 der Slaves 12, 13 aus jeweils einem Absenkungselement 91 für die Spannung und aus einem Begrenzungselement 92 für den Laststrom zusammen. Das jeweilige Absenkungselement 91 ist dem jeweiligen Spannungsregler 8 zur Absenkung des zugeführten Spannungssollwertes US vorgeschaltet. Dem jeweiligen Begrenzungselement 92 ist als Steuersignal der Stromistwert SI des Masters 11 zugeführt. Weiterhin ist das jeweilige Begrenzungselement 92 ausgangsseitig mit dem Sollwerteingang des Stromreglers 7 des jeweiligen Slaves 12, 13 zur Begrenzung des Ausgangsstroms auf den Stromistwert SI des Masters 11 verbunden. Dies ist durch das regelungstechnische Symbol eines Begrenzers symbolisiert.

Im Beispiel der FIG 4 ist das Absenkungselement 91 ein Verstärkerelement, welches den zugeführten Spannungssollwert US um einen Faktor im Bereich von maximal 0,95 bis etwa 0,9 absenkt. Das Verstärkerelement 91 ist typischerweise ein Multiplizierer, welcher den anliegenden Spannungssollwert US mit dem (konstanten) Faktor multipliziert. Der Multiplizierer ist durch das entsprechende "X"-Symbol gekennzeichnet.

Alternativ oder auch zusätzlich kann das Absenkungselement 91 ein Offsetelement sein, welches den zugeführten Spannungssollwert US um einen vorgegebenen Spannungswert im Bereich von maximal 5 % bis 10 % des maximalen Spannungssollwertes US absenkt. In diesem Fall ist das Absenkungselement 91 ein Addierer, welcher den Spannungssollwert US um einen (konstanten) Betrag absenkt.

Die spannungsreglerseitige Absenkung bewirkt, dass der nachfolgende Spannungsregler 8 zur Einstellung eines höheren Laststroms "voll aufmacht", um durch diese Belastung die Feldspannung UF bzw. die Zwischenkreisspannung abzusenken. Erfindungsgemäß wird jedoch der vom jeweiligen Spannungsregler 8 ausgegebene Sollwert für den nachfolgenden Stromregler 7 auf den Stromistwert SI des Masters 11 begrenzt und dadurch die Lastsymmetrierung bewirkt.

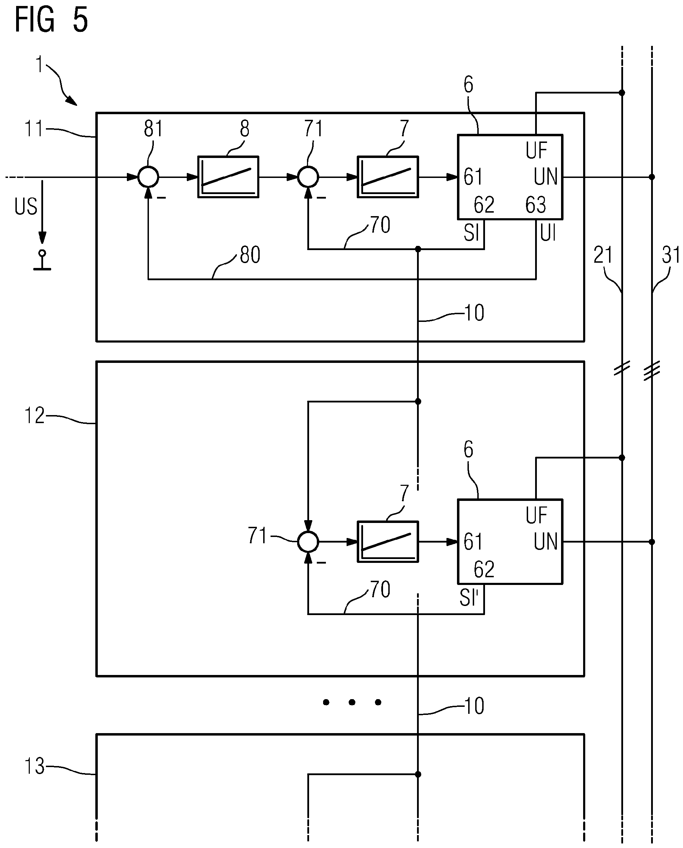

FIG 5 zeigt ein weiteres Beispiel eines Wechselrichters 1 mit einer Lastausgleichsregelung ohne Spannungsregelung der Slaves 12, 13, welches nicht in den Schutzumfang fällt.

Im Vergleich zu FIG 4 erfolgt slaveseitig überhaupt keine Spannungsregelung mehr. Die Lastausgleichsregelung erfolgt hier ausschließlich über die Vorgabe des Stromistwertes SI des Masters 11 als Stromsollwert für die Slaves 12, 13. Nachteilig daran ist jedoch, dass die Slaves 12, 13 nicht mehr "kontrollierbar" sind, sollte aufgrund eines technischen Defektes die Signalübertragung des Stromistwertes SI des Masters 11 ausfallen.

Unabhängig von den vorherigen Ausführungsformen ist es vorstellbar, dass eine aus der Regelungstechnik bekannte Statik-Funktion zum Einsatz kommt. In diesem Fall erfolgt eine Erhöhung des eigenen, übergeordnet vorgegebenen Spannungssollwertes des Masters. Die Erhöhung erfolgt durch eine geringfügige positive Bewertung des Stromistwertes, und zwar umso mehr, je größer der Stromistwert des jeweiligen Teilwechselrichters ist. Dadurch wird erreicht, dass bei geforderten kleinen Lastströmen der nahezu unveränderte Sollwert der Spannung zur Verfügung steht, während bei hohen Stromistwerten der Spannungssollwert erhöht wird. Nachteilig ist bei diesem Verfahren, dass sich nicht immer eine exakte Gleichverteilung der Lastströme einstellt.

## Patentansprüche

1. Wechselrichter welcher mehrere parallel geschaltete Einzelwechselrichter (11-13) mit jeweils einem Leistungsteil (6) zur Umsetzung einer eingangsseitigen Feldspannung (UF) in eine ausgangsseitige Netzspannung (UN) aufweist, wobei einer der Einzelwechselrichter (11) dazu eingerichtet ist als Master betrieben zu werden und wobei die verbleibenden Einzelwechselrichter (12, 13) dazu eingerichtet sind als Slaves betrieben zu werden, wobei alle Einzelwechselrichter (11-13) einen Stromregler (7) und einen überlagerten Spannungsregler (8) zur Regelung ihres jeweiligen Leistungsteils (6) aufweisen und wobei allen Spannungsreglern (8) ein vorgebbarer Spannungssollwert (US) zur Spannungsregelung zugeführt ist, wobei die Slaves (12, 13) jeweils einen Lastausgleichsregler (9) aufweisen und dem jeweiligen Lastausgleichsregler (9) eingangsseitig eine Stromistwertdifferenz (SID) zugeführt ist, wobei die Slaves (12, 13) zur Lastverteilung jeweils einen Differenzbildner (72) aufweisen, **dadurch gekennzeichnet, dass**
der Differenzbildner (72) die Stromistwertdifferenz (SID) aus dem vom Master (11) unverändert zugeführten Stromistwert (SI) und einem Stromistwert (SI') des jeweiligen Slaves (12, 13) bildet, wobei der Differenzbildner (72) als ein Addierer ausgebildet ist, wobei dem Differenzbildner (72) der jeweilige Stromistwert (SI') der Slaves (12, 13) negiert zugeführt ist, und wobei der jeweilige Lastausgleichsregler (9) ausgangsseitig zur Lastausgleichsregelung zumindest mittelbar mit einem Reglereingang (61) des jeweiligen Leistungsteils (6) verbunden ist.

2. Wechselrichter nach Anspruch 1,
**dadurch gekennzeichnet,**
- **dass** der jeweilige Lastausgleichsregler (9) Mittel zur Erzeugung einer Korrekturspannung (UK) bzw. eines dazu korrespondierenden Korrekturwertes in Abhängigkeit der Stromistwertdifferenz (SID) aufweist,
- **dass** der jeweilige Spannungsregler (8) einen Spannungssollwerteingang (82) für den vorgebbaren Spannungssollwert (US) aufweist und
- **dass** dem jeweiligen Spannungssollwerteingang (82) der Slaves (12, 13) zudem die jeweilige Korrekturspannung (UK) zur Lastausgleichsregelung zugeführt ist.

3. Wechselrichter nach Anspruch 2,
**dadurch gekennzeichnet,**
**dass** abhängig vom Betrag der Korrekturspannung (UK) eine betragsmäßige Absenkung des Spannungssollwertes (US) für den jeweiligen Slave (12, 13) für zunehmende Werte der Stromistwertdifferenz (SID) bewirkbar ist bzw. dass abhängig vom Betrag der Korrekturspannung (UK) eine betragsmäßige Erhöhung des Spannungssollwertes (US) für den jeweiligen Slave (12, 13) für abnehmende Werte der Stromistwertdifferenz (SID) bei der Annahme positiver Stromwerte bewirkbar ist.

4. Wechselrichter nach Anspruch 3,
**dadurch gekennzeichnet,**
**dass** die jeweilige Korrekturspannung (UK) maximal 5 % bis 10 % des maximalen Spannungssollwertes (US) beträgt.

5. Wechselrichter nach einem der vorangegangenen Ansprüche,
**dadurch gekennzeichnet,**
**dass** der Master (11) und die Slaves (12, 13) weitestgehend identisch aufgebaute Einzelwechselrichter (11-13) sind.

6. Wechselrichter nach Anspruch 8,
**dadurch gekennzeichnet,**
**dass** die Einzelwechselrichter (11-13) jeweils eine Steuereinheit zum Steuern und Regeln aufweisen und dass die Funktion der jeweiligen Spannungsregler (8), Stromregler (7) und Lastausgleichsregler (9) in Form von Programmroutinen nachgebildet sind, welche auf der jeweiligen Steuereinheit ausführbar sind.

7. Wechselrichter nach einem der vorangegangenen Ansprüche,
**dadurch gekennzeichnet,**
**dass** der Wechselrichter ein Solarwechselrichter zum eingangsseitigen Anschließen an ein Solarmodul (2) oder an ein Solarfeld sowie zum ausgangsseitigen Anschließen an ein Stromversorgungsnetz (3) ist.

## Claims

1. Inverter which has a plurality of individual inverters (11-13) connected in parallel, each having a power unit (6) for converting an input-side field voltage (UF) into an output-side mains voltage (UN), wherein one of the individual inverters (11) is configured to be operated as master and wherein the remaining individual inverters (12, 13) are configured to be operated as slaves,
wherein all the individual inverters (11-13) have a current regulator (7) and a superimposed voltage regulator (8) for regulating its respective power unit (6) and wherein all the voltage regulators (8) are supplied a predefinable voltage setpoint value (US) for voltage regulation, wherein
the slaves (12, 13) each have a load compensation regulator (9) and the respective load compensation regulator (9) is supplied a current actual value difference (SID) on the input side, wherein the slaves (12, 13) each have a difference former (72) for load distribution, **characterised in that** the difference former (72) forms the current actual value difference (SID) from the current actual value (SI) fed unaltered by the master (11) and a current actual value (SI') of the respective slave (12, 13), wherein the difference former (72) is embodied as an adder, wherein the difference former (72) is fed the respective current actual value (SI') of the slave (12, 13) in a negated manner,
and wherein
the respective load compensation regulator (9) is at least indirectly connected on the output side to a regulator input (61) of the respective power unit (6) for load compensation regulation.

2. Inverter according to claim 1,
**characterised in that**
- the respective load compensation regulator (9) has means for generating a correction voltage (UK) or a correction value corresponding thereto as a function of the current actual value difference (SID),
- the respective voltage regulator (8) has a voltage setpoint value input (82) for the predefinable voltage setpoint value (US) and
- the respective voltage setpoint value input (82) of the slave (12, 13) is additionally fed the respective correction voltage (UK) for load compensation regulation.

3. Inverter according to claim 2,
**characterised in that**
as a function of the amount of the correction voltage (UK) a lowering of the voltage setpoint value (US) in terms of amount for the respective slave (12, 13) is able to be induced for rising values of the current actual value difference (SID) or that as a function of the amount of the correction voltage (UK) an increasing of the voltage setpoint value (US) in terms of amount for the respective slave (12, 13) is able to be induced for falling values of the current actual value difference (SID) when assuming positive current values.

4. Inverter according to claim 3,
**characterised in that**
the respective correction voltage (UK) at most amounts to from 5 % to 10 % of the maximum voltage setpoint value (US).

5. Inverter according to one of the preceding claims,
**characterised in that**
the master (11) and the slaves (12, 13) are for the most part identically designed individual inverters (11-13).

6. Inverter according to claim 8,
**characterised in that**
the individual inverters (11-13) each have a control unit for controlling and regulating and that the function of the respective voltage regulator (8), current regulator (7) and load compensation regulator (9) are emulated in the form of program routines which are able to be executed on the respective control unit.

7. Inverter according to one of the preceding claims,
**characterised in that**
the inverter is a solar inverter for connecting to a solar module (2) or to a solar field on the input side and also for connecting to a current supply network (3) on the output side.

## Revendications

1. Onduleur, qui a plusieurs onduleurs (11 à 13) individuels montés en parallèle, ayant chacun une partie (6) de puissance pour transformer une tension (UF) d'excitation du côté de l'entrée en une tension (UN) de réseau du côté de la sortie, dans lequel l'un des onduleurs (11) individuels est conçu pour fonctionner comme maître et dans lequel les onduleurs (12, 13) individuels restant sont conçus pour fonctionner comme esclaves, dans lequel tous les onduleurs (11 à 13) individuels ont un régleur (7 ) de courant et un régleur (8) de tension superposé pour régler leur partie (6) de puissance respective et dans lequel il est envoyé à tous les régleurs (8) de tension une valeur (UN) de consigne de tension pouvant être donnée à l'avance pour régler la tension, dans lequel
les esclaves (12, 13) ont chacun un régleur (9) de compensation de charge et, à chaque régleur (9) de compensation de charge, est envoyée, du côté de l'entrée, une différence (SID) de valeur réelle de courant, les esclaves (12, 13) ayant, pour la répartition de charge, chacun un formeur (72) de différence, **caractérisé en ce que** le formeur (72) de différence forme la différence (SID) de valeur réelle de courant à partir de la valeur (SI) réelle de courant envoyée inchangée par le maître (11) et d'une valeur (SI') réelle de courant de l'esclave (12, 13) respectif, le formeur (72) de différence étant constitué en additionneur, dans lequel il est envoyé, de manière inversée, au formeur (72) de différence la valeur (SI') réelle de courant respectif de l'esclave (12, 13) et dans lequel le régleur (9) de compensation de charge respectif est relié du côté de la sortie pour régler la compensation de charge, au moins indirectement, à une entrée (61) de régleur de la partie (6) de puissance respective.

2. Onduleur suivant la revendication 1,
**caractérisé**
- **en ce que** le régleur (9) respectif de compensation de charge a des moyens de production d'une tension (UK) de correction ou d'une valeur de correction y correspondant en fonction de la différence (SID) de valeurs réelles de courant,
- **en ce que** le régleur (8) de tension respectif a une entrée (82) de valeur de consigne de tension pour la valeur (UF) de consigne de tension pouvant être donnée à l'avance et
- **en ce qu'**à l'entrée (82) de valeurs de consigne de tension respectives des esclaves (12, 13), est envoyée, en outre, la tension (UK) de correction respective pour le réglage de la compensation de charge.

3. Onduleur suivant la revendication 2,
**caractérisé**
**en ce qu'**en fonction du montant de la tension (UK) de correction, il peut être provoqué un abaissement conforme à ce montant de la valeur (US) de consigne de tension pour l'esclave (12, 13) respectif, pour des valeurs croissantes de la différence (SID) de valeurs réelles de courant, ou en ce que, en fonction du montant de la tension (UK) de correction, il peut être provoquée une augmentation conforme à ce montant de la valeur (US) de consigne de tension pour l'esclave (12, 13) respectif, pour des valeurs décroissantes de la différence (SID) de valeurs réelles de courant, en supposant les valeurs de courant positives.

4. Onduleur suivant la revendication 3,
**caractérisé**
**en ce que** la tension (UK) de correction respective représente au maximum de 5 % à 10 % de la valeur (US) de consigne de tension maximum.

5. Onduleur suivant l'une des revendications précédentes,
**caractérisé**
**en ce que** le maître (11) et les esclaves (12, 13) sont des onduleurs (11 à 13) individuels constitués, dans une grande mesure, pareillement.

6. Onduleur suivant la revendication 8,
**caractérisé**
**en ce que** les onduleurs (11 à 13) individuels ont chacun une unité de commande pour la commande et le réglage et en ce que les fonctions du régleur (8) de tension individuelle, du régleur (7) de courant et du régleur (9) de compensation de charge sont reproduits sous la forme de routines de programme qui peuvent être mises en oeuvre sur l'unité de commande respective.

7. Onduleur suivant l'une des revendications précédentes,
**caractérisé**
**en ce que** l'onduleur est un onduleur solaire pour le raccordement du côté de l'entrée à un module (2) solaire ou à un champ solaire, ainsi que pour le raccordement du côté de la sortie à un réseau (3) d'alimentation en courant.
